(19) **Europäisches Patentamt**
**European Patent Office**
**Office européen des brevets**

(11) **EP 1 988 533 B1**

(12) **EUROPEAN PATENT SPECIFICATION**

(45) Date of publication and mention
of the grant of the patent:
**10.10.2012 Bulletin 2012/41**

(51) Int Cl.:
*G09G 3/34* (2006.01)    *G02F 1/167* (2006.01)
*G09G 3/20* (2006.01)    *G09G 5/08* (2006.01)

(21) Application number: **07714682.7**

(22) Date of filing: **21.02.2007**

(86) International application number:
**PCT/JP2007/053182**

(87) International publication number:
**WO 2007/099829 (07.09.2007 Gazette 2007/36)**

(54) **INFORMATION EQUIPMENT**

INFORMATIONSGERÄTE

EQUIPEMENT INFORMATIQUE

(84) Designated Contracting States:
**DE FR**

(30) Priority: **22.02.2006   JP 2006045327**

(43) Date of publication of application:
**05.11.2008   Bulletin 2008/45**

(73) Proprietor: **Bridgestone Corporation
Tokyo 104-8340 (JP)**

(72) Inventors:
• **NIHEI, Norio**
**Kodaira-shi, Tokyo 1878531 (JP)**
• **YOKOO, Akihiko**
**Kodaira-shi, Tokyo 1878531 (JP)**

• **YAMADA, Shuhei**
**Kodaira-shi, Tokyo 1878531 (JP)**

(74) Representative: **Oxley, Robin John George et al
Marks & Clerk LLP
90 Long Acre
London
WC2E 9RA (GB)**

(56) References cited:
**EP-A1- 1 148 468        EP-A2- 0 703 561
WO-A1-2005/024771   WO-A1-2005/055187
JP-A- 01 163 797         JP-A- 2003 315 848
JP-A- 2005 077 633      JP-A- 2005 077 634
US-A- 4 804 951          US-A- 5 825 345
US-A1- 2002 036 616**

**Description**

TECHNICAL FIELD

The present invention relates to an information equipment comprising: a display device having display memory properties, which displays information by a passive drive or an active drive, in which scan electrodes are sequentially addressed; and a position detector for detecting a position of an input means; wherein a display information is updated in accordance with an input of the position detector.

RELATED ART

Generally, as a display device having display memory properties, various electric papers are known. As one example, there is known an information display panel, in which display media are sealed in a gaseous space between two substrates, at least one substrate being transparent, and, in which the sealed display media, to which an electrostatic field is applied from scan electrodes and select electrodes arranged respectively to the substrates in an intersecting manner, are made to move so as to display information such as an image (For example, Chou kokurai, et al. "New toner display device (I)", The Imaging Society of Japan "Japan Hardcopy '99" (July 21-23, 1999) Transaction Pages 249-252).

Recently, in the display device such as electric papers having display memory properties, there arises a requirement for adding memo, underline and handwritten information on the display device by means of an input means such as pen and finger, and also there arises a requirement for changing an attribute of line to be upgraded (such as line thickness, color, shape and so on). Therefore, it is thought that an information equipment that is capable of adding information on the display device by means of an input means is to be constituted by combining the display device having display memory properties and a position detector for detecting a position of the input means.

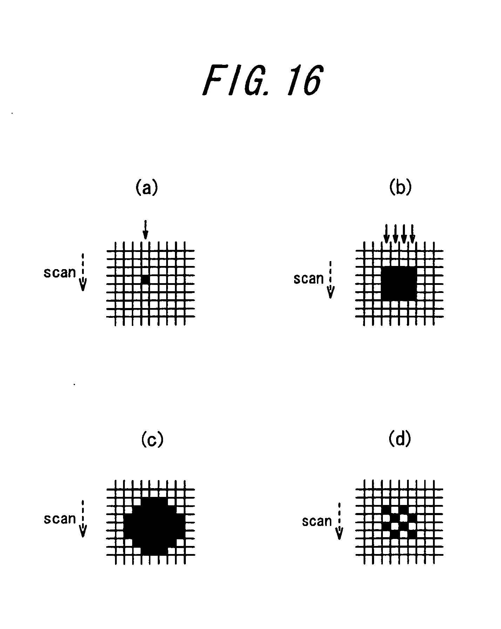

In the information equipment mentioned above, if use is made of the display device, which displays information by a passive drive or an active drive in which scan electrodes are sequentially addressed, as the display device having display memory properties (display device of bistable type), there arise following problems. That is, especially in the case such that the line thickness of the line to be displayed is made thicker as shown in Figs. 16a - 16d, the number of scan electrodes to be scanned for changing the attribute of the line to be displayed is increased, and a display speed becomes slow. Here, Fig. 16a shows a dot (one scan electrode) for small characters. On the other hand, Fig. 16b shows a square dot (four scan electrodes) for bold characters, Fig. 16c illustrates a circle dot (seven scan electrodes) for bold characters and Fig. 16d depicts a dot (four scan electrodes) for intermediate bold characters. US 5,825,345 describes a display integrated type tablet device. WO 2005/055187 describes display apparatus with input pen for a wearable PC.

DISCLOSURE OF THE INVENTION

The present invention has for its object to eliminate the drawbacks mentioned above and to provide an information equipment, in which a display speed does not become slow even in a display device, which displays information by a passive drive or an active drive in which scan electrodes are sequentially addressed.

The invention is set forth in claim 1.

According to the present invention, a display device having display memory properties, which displays information by a passive drive or an active drive, in which scan electrodes are sequentially addressed; and a position detector for detecting a position of an input means; wherein a display information is updated in accordance with an input of the position detector, is characterized in that a plurality of scan electrodes are selected simultaneously, when the display information is to be changed.

As a preferable embodiment of the information equipment according to the invention, with respect to the display information in which three of more scan electrodes are to be scanned for displaying, the display information is divided into a plurality of display information portions, which can be displayed at a time by selecting simultaneously a plurality of scan electrodes, and the display information portions are successively displayed. Moreover, in accordance with a gray level (density) of respective pixels in the display information to be displayed, the pixel is included in an overlapped manner in the display information portions, which can be displayed at a time by selecting simultaneously a plurality of scan electrodes. Further, the display device is constituted by an information display panel, in which at least two groups of display media made of at least one group of particles having optical reflectance and charge characteristic are sealed in a gaseous space between two substrates, at least one substrate being transparent, and, in which the sealed display media, to which an electrostatic field is applied from scan electrodes and select electrodes arranged respectively to the substrates in an intersecting manner, are made to move so as to display information such as an image.

Furthermore, it should be noted that, in the present invention, the display information includes figure, character and so on.

According to the invention, since a plurality of scan electrodes are selected simultaneously, when the display information is to be changed, it is possible to obtain the information equipment, in which a display speed does not become slow even in a display device, which displays information by a passive drive or an active drive in which scan electrodes are sequentially addressed.

## BRIEF DESCRIPTION OF THE DRAWINGS

[Fig.1] Fig. 1 is a schematic view showing one construction of an information equipment according to the invention.

[Fig. 2] Fig. 2 is a schematic view explaining one embodiment of the information equipment according to the invention.

[Fig. 3] Fig. 3 is a schematic view explaining another embodiment of the information equipment according to the invention.

[Fig. 4] Fig. 4 is a schematic view explaining still another embodiment of the information equipment according to the invention.

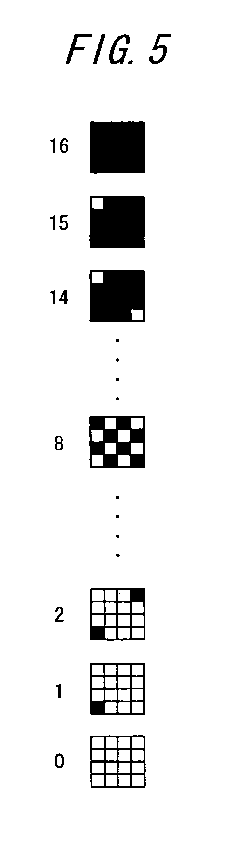

[Fig. 5] Fig. 5 is a schematic view explaining still another embodiment of a square dot for intermediate bold characters in the information equipment according to the invention.

[Fig. 6] Fig. 6 is a schematic view explaining still another embodiment of the information equipment according to the invention.

[Fig. 7] Fig. 7 is a schematic view explaining an application of the information equipment according to the invention.

[Fig. 8] Figs. 8a and 8b are schematic views respectively showing one specific embodiment of an electric paper display with handwritten input function as one example of the information equipment according to the invention.

[Fig. 9] Fig. 9 is a schematic view illustrating another embodiment of the electric paper display with handwritten input function as one example of the information equipment according to the invention.

[Fig. 10] Fig. 10 is a flow chart explaining a main routine of an interrupt process.

[Fig. 11] Fig. 11 is a flow chart explaining a subroutine sub_COMMAND.

[Fig. 12] Fig. 12 is a flow chart explaining a subroutine sub_DRAW.

[Fig. 13] Fig. 13 is a schematic view showing an actual application of the electric paper display with handwritten input function as the information equipment according to the invention.

[Fig. 14] Figs. 14a and 14b are schematic views respectively showing an information display panel preferably used as a display device of the information equipment according to the invention.

[Fig. 15] Fig. 15 is a schematic view illustrating one embodiment of partition wall shapes of the information display panel preferably used as the display device of the information equipment according to the invention.

[Fig. 16] Figs. 16a - 16d are schematic views respectively explaining problems of known displaying process.

## BEST MODE FOR CARRYING OUT THE INVENTION

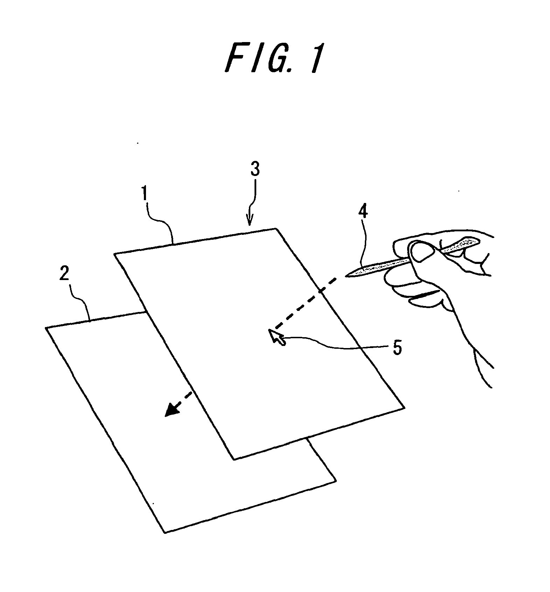

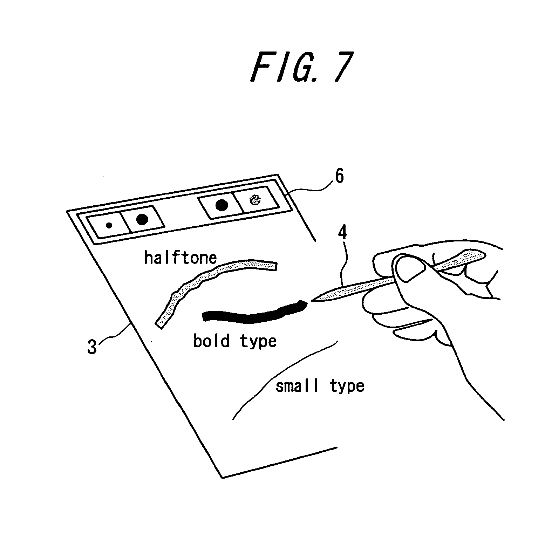

Fig. 1 is a schematic view showing one construction of an information equipment according to the invention. In the embodiment shown in Fig. 1, a transparent display device 1 having memory properties and a position detector 2 are stacked to form an information equipment 3, and information such as a cursor 5 here is added on the display device 1 by means of an input pen 4 for an input operation. The construction mentioned above is the same as that of the known one shown in Fig. 7.

In the embodiment shown in Fig. 1, as to the display device 1, use is made of a device having display memory properties, which displays information by a passive drive or an active drive, in which scan electrodes are sequentially addressed. As one example, an information display panel using electric liquid powders or charged particles will be explained later. As to the position detector 2, use is made of a device, which detects a position of the input pen 4 or the finger as an input means by utilizing pressure, capacitance, electromagnetic coupling, optical coupling, coupling of surface acoustic wave (including ultrasonic wave) and so on. In the embodiment shown in Fig. 1, in which the display device 1 and the position detector 2 are stacked, a physical positional relation between the display device 1 and the position detector 2 (stacked / not stacked, front / rear, and so on) and a size thereof may be varied. Moreover, resolutions of the display device 1 and the position detector 2 may be same or may be different. In the case that the resolutions mentioned above are different, a suitable transforming means may be arranged.

The feature of the information equipment 3 according to the invention is that a plurality of scan electrodes are selected simultaneously to display information, when the display information is to be changed.

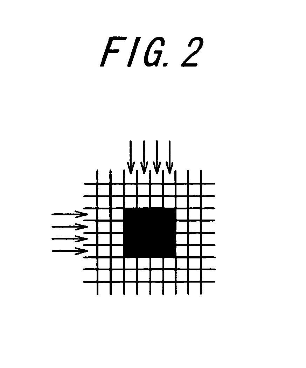

Fig. 2 is a schematic view explaining one embodiment of the information equipment according to the invention. In the embodiment shown in Fig. 2, a square dot (four scan electrodes) for bold character is displayed according to the invention as one example. In the known embodiment, the square dot for bold character is not displayed by sequentially addressing four scan electrodes. However, in this embodiment, the square dot for bold character can be displayed at a time by selecting four scan electrodes simultaneously.

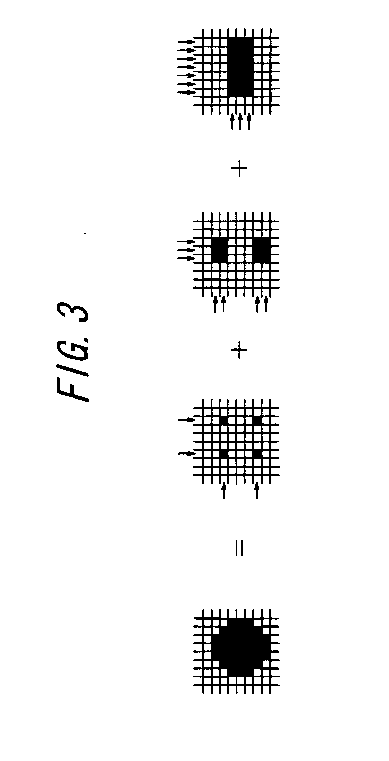

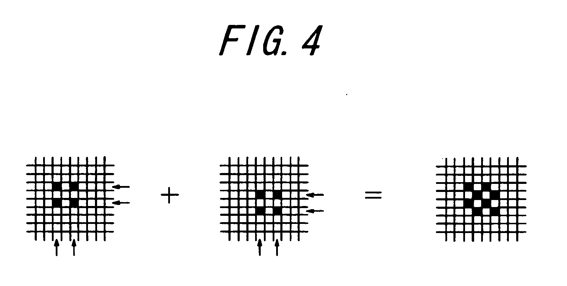

Fig. 3 and Fig. 4 are schematic views respectively explaining another embodiment of the information equipment according to the invention. In the embodiments shown in Fig. 3 and Fig. 4, with respect to the display information in which three or more scan electrodes are to be scanned sequentially for displaying, the display information is divided into a plurality of display information portions, which can be displayed at a time by selecting simultaneously a plurality of scan electrodes, and the display information portions are successively displayed. In the embodiment shown in Fig. 3, a circle dot (seven scan electrodes) for bold characters is divided into three portions, which can be displayed at a time, and the three portions are successively and continuously displayed to display the circle dot for bold characters. Moreover, in the embodiment shown in Fig. 4, a square dot (four scan electrodes) for intermediate bold characters is divided into two portions, which can be displayed at a time, and the two portions are successively and continuously displayed to display the square dot for intermediate bold characters.

In the embodiment shown in Fig. 3 and Fig. 4, respective divided display information portions can be displayed at a time by selecting the scan electrodes once. Therefore, the display, which needs seven or four scanning operations in the known example, can be performed by three or two scanning operations. As a result, an improvement of display speed and an improvement of response speed of the handwritten input can be achieved.

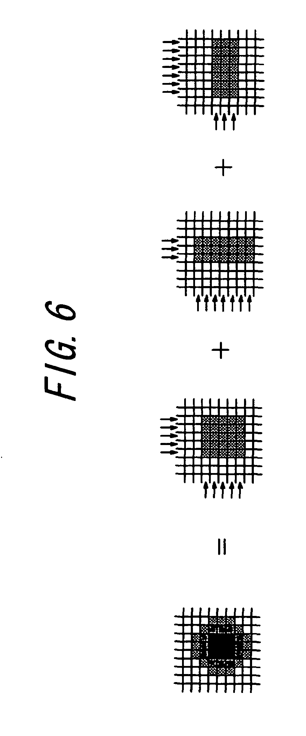

Fig. 6 is a schematic view explaining still another embodiment of the information equipment according to the invention. In the embodiment shown in Fig. 6, in accordance with a gray level (density) of respective pixels in the display information to be displayed, the pixel is included in an overlapped manner in the display information portions, which can be displayed at a time by selecting simultaneously a plurality of scan electrodes. Therefore, it is possible to obtain a pixel having a deeper gray level according to the overlapped numbers. In the embodiment shown in Fig. 6, a circular dot for bold characters having a gray level (three gray levels) is divided into three portions, and the divided three portions are displayed continuously. In this case, a pixel to which a scanning operation is overlapped at three times become a deep color, a pixel to which a scanning operation is overlapped at two times becomes an intermediate color, and a pixel to which a scanning operation is performed only at one time becomes a pale color.

Fig. 7 is a schematic view explaining an application of the information equipment according to the invention. In the embodiment shown in Fig. 7, a pen selection button 6, which performs a selection of lines (for small characters, bold characters and so on), densities, colors and so on, is arranged at an upper portion of the display device 1 of the information equipment. After a desired button in the pen selection button 6 is selected by the pen 4, a display information indicated by the line corresponding to the selected button, can be displayed on the display device 1.

In the known embodiment, the display (page writing) is performed by scanning all the scan electrodes sequentially. However, in the above embodiment according to the invention, the display is performed by a partial writing in which a writing operation is performed for only a part of the scan electrodes, or by a partial writing / partial deleting in which the partial writing and a partial deleting in which a deleting operation is performed for only a part of the scan electrodes, is performed, or by a combination thereof. Therefore, in the present invention, it is possible to perform more excellent display. In this embodiment, a figure includes "characters", and it is possible to display brush style characters by using the function mentioned above.

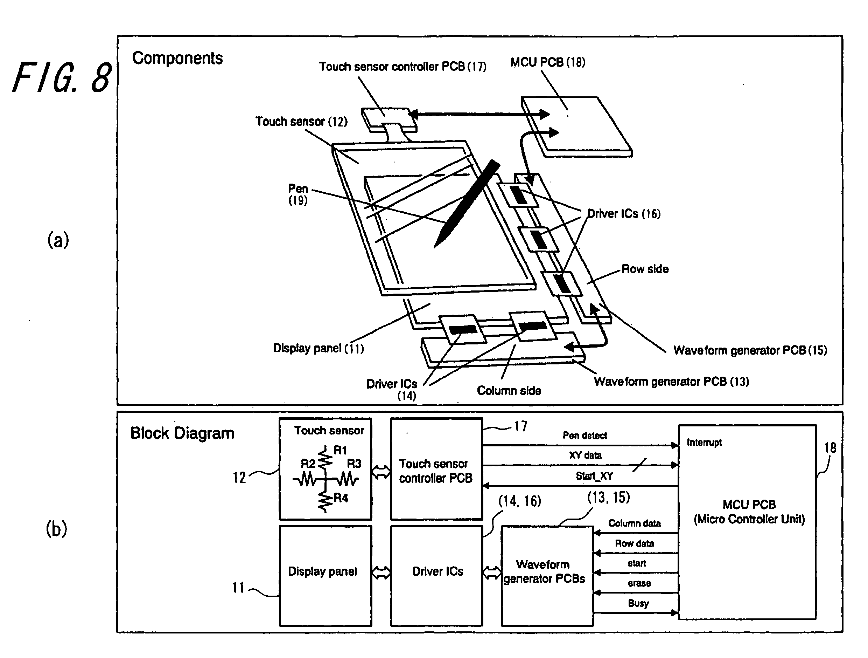

Then, specific constructions and operations of the information display equipment according to the invention will be explained in detail with reference to Figs. 8a and 8b - Fig. 13.

Figs. 8a and 8b are schematic views respectively showing a specific example of an electric paper display with a handwritten input function as one embodiment of the information equipment according to the invention, and Fig. 8a illustrates its construction and Fig. 8b depicts respective functional blocks and a data flow between these functional blocks. In the electric paper display with the handwritten input function shown in Fig. 8a, a touch sensor 12 having an optical transmitting property is stacked on a front surface of a display panel 11 having a display memory property (sometimes called as bistability) to form an integral construction.

Moreover, a waveform generator 13 at a column side is connected to the display panel 11 through driver ICs 14 at a column side, and a waveform generator 15 at a row side is connected to the display panel 11 through driver ICs 16 at a row side. Further, a print circuit board constituting a touch sensor controller 17 is connected to the touch sensor 12. A print circuit board constituting a micro controller unit 18 (sometimes called as MCU) is connected to the wave generators 13 and 15. Information on the touch sensor 12 written by a pen 19 is supplied to the MCU 18 through the touch sensor controller 17. In accordance with the thus supplied information, the MCU 18 supplies a display information to the wave generators 13 and 15, and information is displayed on the display panel 11. In this manner, it is possible to display a dot or a line on the corresponding pixel by tracing on the touch sensor 12 with the pen 19 in such a manner that characters and pictures are written on a notebook by a pencil.

The operations mentioned above can be achieved by communicating data between respective functional blocks shown in Fig. 8b. In the embodiment shown in Fig. 8b, the touch sensor 12 outputs a set of resistivities (R1, R2, R3, R4) corresponding to a position to which the pen 19 is pressed. When the touch sensor controller 17 detects Start_XY signal from the MCU 18, the touch sensor controller 17 calculates coordinates of the pen 19 in accordance with the set of resistivities of the touch sensor 12 and outputs XY coordinates data to the MCU 18. Moreover, the touch sensor controller 17 has a function for detecting whether or not the pen 19 touches the touch sensor 12. If the touch sensor controller 17 detects a touch of the pen 19, the touch sensor controller 17 outputs Pen detect signal. The MCU 18 can perform effectively necessary software processing by detecting the Pen detect signal as an interrupt signal.

The display panel 11 has stripe electrodes in a longitudinal direction (Column side) and in a lateral direction (Row side) as component parts, and a voltage is applied to the stripe electrodes respectively from the driver ICs 14 and 16. The waveform generators 13 and 15 receive, from the MCU 18, Row data indicating writing patterns at a row side and Column data indicating writing patterns at a column side. After that, if the waveform generators 13 and 15 detect start signal, the waveform generators 13 and 15 generate a suitable pattern of applied voltage, and supply a voltage waveform to the display panel 11 by using the driver ICs 14 and 16. Moreover, if the waveform generators 13 and 15 receive erase signal, the waveform generators 13 and 15 generate and apply a voltage pattern, which returns the display panel 11 to an initial state.

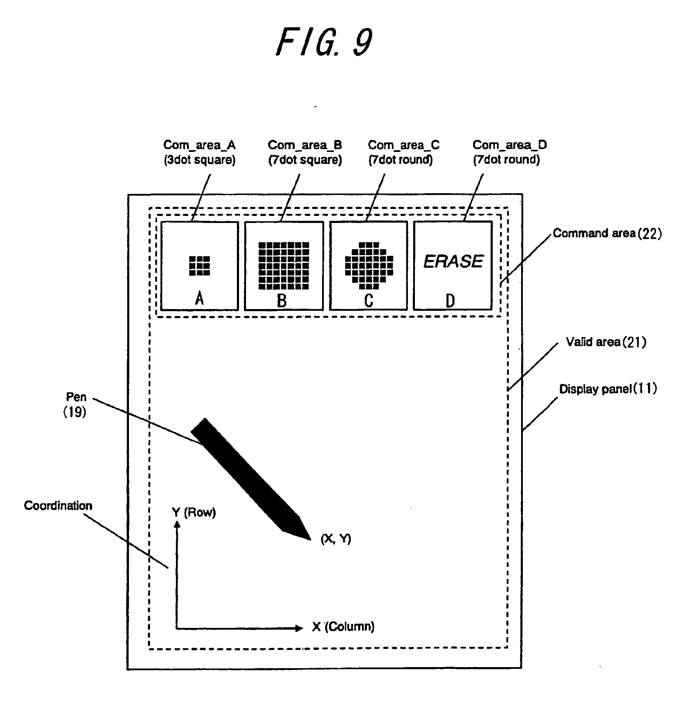

Fig. 9 is a schematic view showing another specific example of an electric paper display with a handwritten input function as one embodiment of the information equipment according to the invention. In the embodiment shown in Fig. 9, a command area 22 having a selection function for size and shape of a tip of the pen 19 is arranged in a display valid area 21 of the display panel 11. In the case of fixing a display of the command area 22, this display portion may be formed by a printing and so on. In the case of changing an available command suitably, this display portion is formed by a part of the display valid area 21. In this embodiment, there are four command regions Com_area_A, Com_area_B, Com_area_C, and Com_area_D in the command area 22. If the pen 19 touches (taps) respective regions A-C, a type of the tip of the pen 19 can be changed, and 3dot square, 7dot square and 7dot round can be selected respectively in accordance with the touched region.

Moreover, in this embodiment, if a region D is touched, it is possible to return the display panel 11 to an initial state. Generally, a term "initial state" means a deleting operation of lines and characters displayed by the handwritten input, but it is not limited to the means mentioned above. Further, in this embodiment, if the pen 19 touches the display valid area 21 except for the command area 11, it is possible to write dots and lines at an arbitrary position.

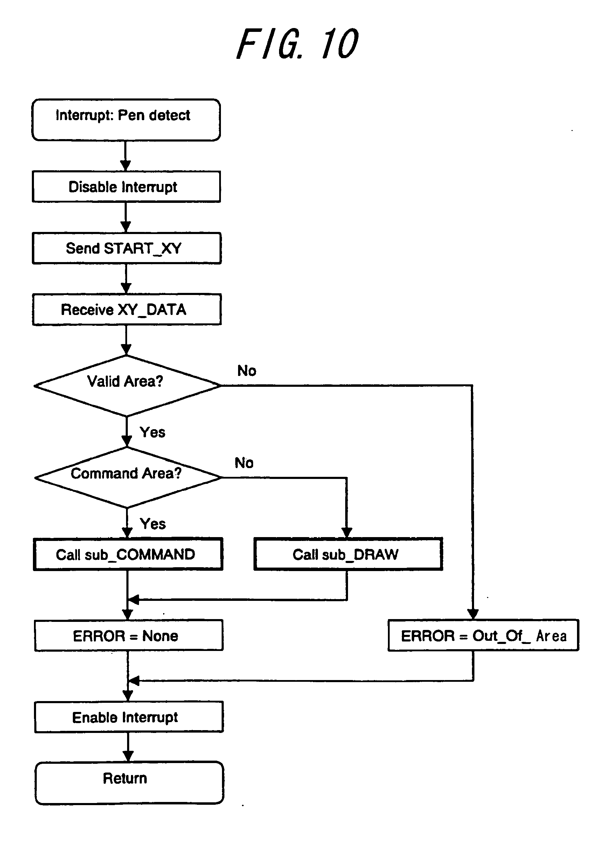

Fig. 10 - Fig. 12 are flow charts respectively showing one embodiment of a process of firmware, which is implemented in the MCU. Hereinafter, an operation of the information equipment according to the invention will be explained with reference to the flow charts shown in Fig. 10 - Fig. 12.

Fig. 10 is a flow chart explaining a main routine of an interrupt process. If the touch sensor controller 17 detects a state such that the pen 19 touches the touch sensor 12, the touch sensor controller 17 transmits Pen detect signal to the MCU 18. The MCU 18 receives the Pen detect signal as an interrupt input, ceases a general process (if any) and jumps to an interrupt process "Interrupt: Pen detect". The MCU 18 outputs START_XY signal to the touch sensor controller 17, starts to perform a process for calculating the pen coordinates and waits XY_DATA signal. After the XY_DATA signal is received, whether or not the received data is existent in the display valid area 12 is determined. Then, if the received data is out of the area, ERROR is set and the interrupt process is ceased. If the received data is in the display valid area 12, whether or not the received data is in the command area 22 is determined. If it is in the area, a subroutine sub_COMMAND is called, and if it is out of the area, a subroutine sub_DARW is called. After returned from the subroutine, ERROR is set and the Interrupt process is ceased.

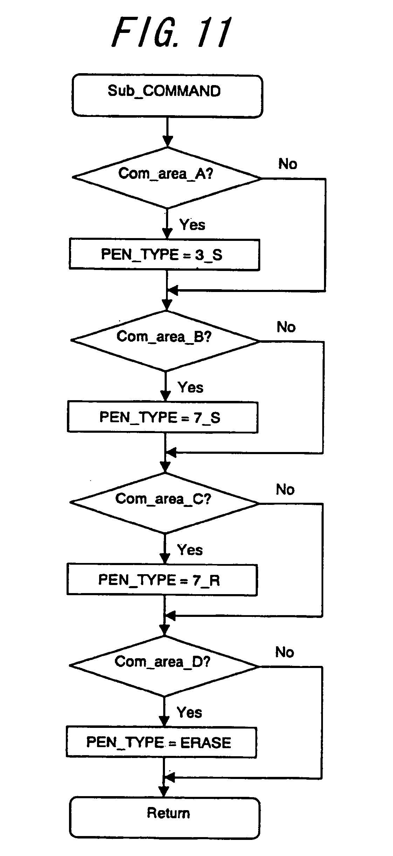

Fig. 11 is a flow chart explaining a subroutine sub_COMMAND. In the subroutine sub_COMMAND, which command do the pen coordinates received from the touch sensor controller 17 correspond to is successively determined, and a data for a variable PEN_TYPE is set. In this embodiment, as the variable PEN_TYPE, a data 3_S is set when the pen coordinates are in the command region Com_area_A, a data 7_S is set when the pen coordinates are in the command region Com_area_B, a data 7_R is set when the pen coordinates are in the command region Com_area_C and a data ERASE is set when the pen coordinates are in the command region Com_area_D.

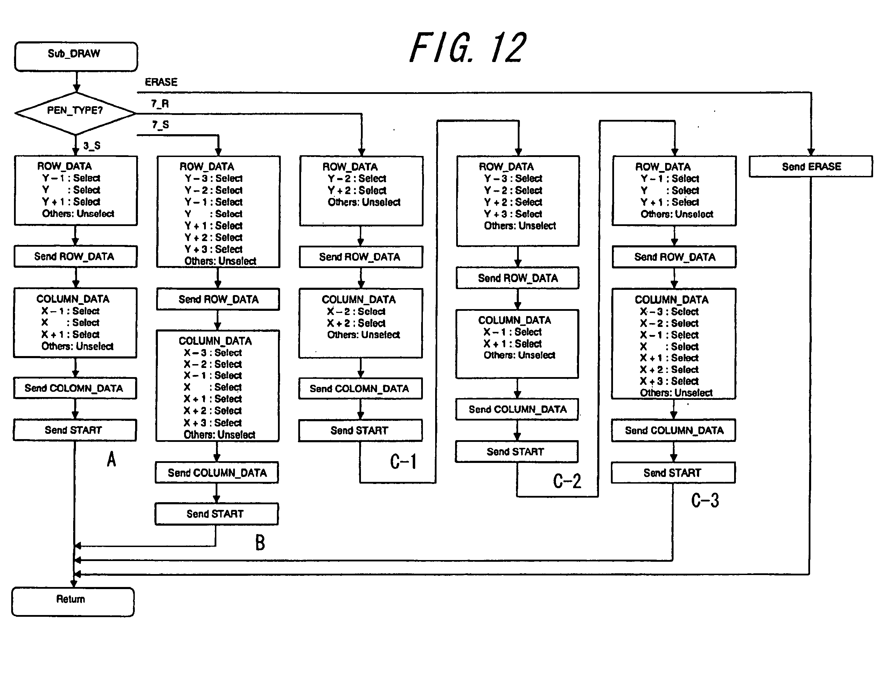

Fig. 12 is a flow chart explaining a subroutine sub_DRAW. In the subroutine sub_DRAW, one of the four kinds of processing is performed in accordance with a data of the variable PEN_TYPE and the returned.

When the data PEN_TYPE is 3_S, square dots indicated by 3 dots x 3 dots are displayed. In this case, a data ROW_DATA, in which only three lines corresponding to the detected coordinates Y at a row side and its before and behind coordinates are selected, is previously created. After that, ROW_DATA is transmitted to the waveform generator 15. In the same manner, a data COLUMN_DATA, in which only three lines corresponding to the detected coordinates X at a column side and its before and behind coordinates are selected, is previously created. After that, COLUMN_DATA is transmitted to the waveform generator 13. After the ROW_DATA and the COLUMN_DATA are transmitted, a voltage waveform for writing is applied to the line selected by outputting the START signal, and a color of the selected pixel is changed. In this case, a writing pattern becomes a shape shown in the region A in Fig. 9.

When the data PEN_TYPE is 7_S, square dots indicated by 7 dots x 7 dots are displayed. In this case, a data ROW_DATA, in which only seven lines corresponding to the detected coordinates Y at a row side and its before and behind respective three coordinates are selected, is previously created. After that, ROW_DATA is transmitted to the waveform generator 15. In the same manner, a data COLUMN_DATA, in which only seven lines corresponding to the detected coordinates X at a column side and its before and behind respective three coordinates are selected, is previously created. After that, COLUMN_DATA is transmitted to the waveform generator 13. After the ROW_DATA and the COLUMN_DATA are transmitted, a voltage waveform for writing is applied to the line selected by outputting the START signal, and a color of the selected pixel is changed. In this case, a writing pattern becomes a shape shown in the region B in Fig. 9.

When the data PEN_TYPE is 7_R, circular dots indicated by 7 dots x 7 dots are displayed. In this case, three writing operations are performed continuously. At first, a data ROW_DATA, in which only two lines corresponding to respective coordinates before and behind the detected coordinates Y at a row side with one line space are selected, is previously created. After that, ROW_DATA is transmitted to the waveform generator 15. In the same manner, a data COLUMN_DATA, in which only two lines corresponding to respective coordinates before and behind the detected coordinates X at a column side with one line space are selected, is previously created. After that, COLUMN_DATA is transmitted to the waveform generator 13. After the ROW_DATA and the COLUMN_DATA are transmitted, a voltage waveform for writing is applied to the line selected by outputting the START signal, and a color of the selected pixel is changed. In this case, a writing pattern becomes a shape shown in the region C-1, which is a part of the region C in Fig. 9.

Then, a data ROW_DATA, in which only four lines corresponding to respective two coordinates before and behind the detected coordinates Y at a row side are selected, is previously created. After that, ROW_DATA is transmitted to the waveform generator 15. In the same manner, a data COLUMN_DATA, in which only four lines corresponding to respective two coordinates before and behind the detected coordinates X at a column side space are selected, is previously created. After that, COLUMN_DATA is transmitted to the waveform generator 13. After the ROW_DATA and the COLUMN_DATA are transmitted, a voltage waveform for writing is applied to the line selected by outputting the START signal, and a color of the selected pixel is changed. In this case, a writing pattern becomes a shape shown in another region C-2, which is a part of the region C in Fig. 9.

Finally, a data ROW_DATA, in which only three lines corresponding to the detected coordinates Y at a row side and its before and behind coordinates are selected, is previously created. After that, ROW_DATA is transmitted to the waveform generator 15. In the same manner, a data COLUMN_DATA, in which only three lines corresponding to the detected coordinates X at a column side and its before and behind coordinates are selected, is previously created. After that, COLUMN_DATA is transmitted to the waveform generator 13. After the ROW_DATA and the COLUMN_DATA are transmitted, a voltage waveform for writing is applied to the line selected by outputting the START signal, and a color of the selected pixel is changed. In this case, a writing pattern becomes a shape shown in another region C-3, which is a part of the region C in Fig. 9. The region C in Fig. 9 is obtained by the displayed region C-1, region C-2 and region C-3.

When the data PEN_TYPE is ERASE, the display panel 11 is returned to an initial state. Therefore, ERASE signal is output to the waveform generators 13 and 15.

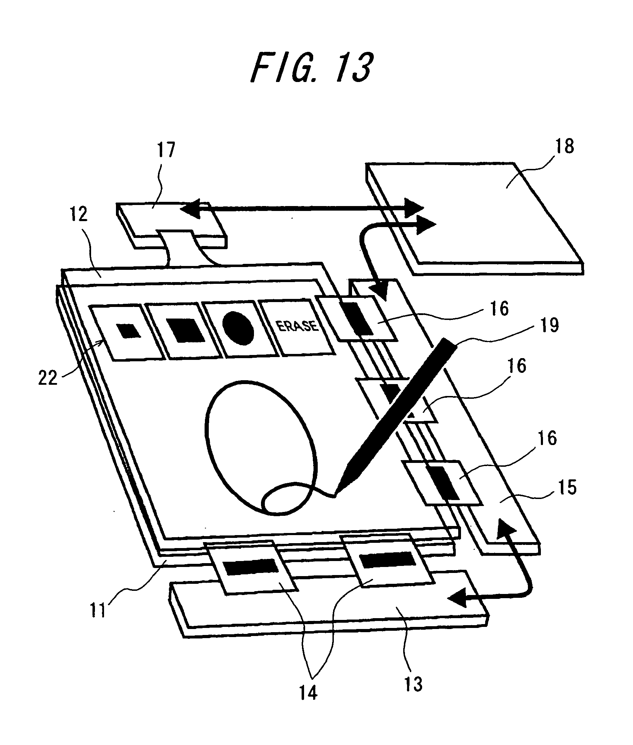

Fig. 13 is a schematic view showing an actual application of the electric paper display with handwritten input function as the information equipment according to the invention. In the embodiment shown in Fig. 13, a small square is selected as a size of the tip of the pen 19, and a character "Q" is written and displayed by the pen 19.

Then, an information display panel used preferably for the display device 1 of the information equipment according to the invention will be explained.

At first, a basic construction of an information display panel used in the information equipment according to the present invention will be explained. In the information display panel used in the present invention, an electrostatic field is applied to display media sealed in the space between two opposed substrates. Along a direction of the applied electrostatic field by means of the force of the electrostatic field, Coulomb's force or the like, the charged display media are attracted and moved by varying a direction of electrostatic field. Accordingly, information such as an image or the like can be displayed. Therefore, it is necessary to design the information display panel in such a manner that the display media can move evenly and maintain stability during a reciprocal operation or during a reserving state. Here, as to forces applied to the particles constituting display media, there are an attraction force between the particles due to Coulomb' force, an imaging force with respect to the electrodes or substrates, an intermolecular force, a liquid bonding force, a gravity and the like.

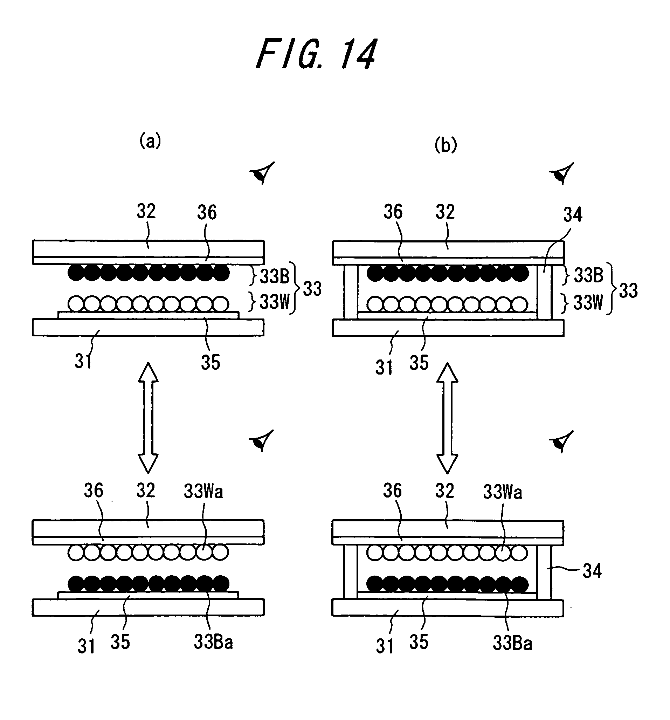

Examples of the information display panel that is an object of the invention will be explained with reference to Figs. 14a and 14b. In the examples shown in Figs. 14a and 14b, at least two or more groups of display media 33 having different optical reflectance and different charge characteristics and consisting of at least one or more groups of particles (here, white color display media 33W made of the particles for white color display media 33Wa and black color display media 3B made of the particles for black color display media 33Ba are shown) are moved in a perpendicular direction with respect to substrates 31 and 32, in accordance with an electric field generated by applying a voltage between an electrode 35 arranged to the substrate 31 and an electrode 36 arranged to the substrate 32, so as to display a black color by viewing the black color display media 33B to an observer or so as to display a white color by viewing the white color display media 33W to the observer. In the example shown in Fig. 14b, the line electrodes are arranged to the substrates respectively in an intersecting manner to form an electrode pair, but individual electrodes may be arranged to form an electrode pair. Moreover, a cell is formed by arranging for example grid-like partition walls 34 between the substrates 31 and 32. Moreover, in Fig. 14b, the partition walls arranged at the near side are omitted.

The explanations mentioned above can be applied in the same manner if the white display media 33W are substituted by white display media made of liquid powders and the black display media 33B made of particles are substituted by black display media made of liquid powders. As to the liquid powders, explanations will be performed later. Moreover, a color combination of the particles for display media is not limited to white/black, but various color combination may be used.

Hereinafter, respective members constituting the information display panel according to the invention will be explained.

As the substrate, at least one of the substrates is the transparent substrate 12 through which a color of the display media can be observed from outside of the panel, and it is preferred to use a material having a high transmission factor of visible light and an excellent heat resistance. The other substrate 11 may be transparent or may be opaque. Examples of the substrate material include polymer sheets such as polyethylene terephthalate, polyethylene naphthalate, polyether sulfone, polyethylene, polycarbonate, polyimide or acryl and metal sheets having flexibility and inorganic sheets such as glass, quartz or so having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, there is a drawback as a thin-type information display panel. In the case such that the display device 1 is stacked under the position detector 2, it is necessary to use a transparent device such as a resistor film type touch panel, an ultrasonic type touch panel, a dot sensor type touch panel and so on as the position detector 2.

As a material of the electrode, use is made of metals such as aluminum, silver, nickel, copper, gold, or, conductive metal oxides such as indium tin oxide (ITO), zinc-toped indium tin oxide (IZO), indium oxide, conductive tin oxide, antimony tin oxide (ATO), conductive zinc oxide and so on, or, conductive polymers such as polyaniline, polypyrrole, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or, a method in which conductive materials and solvents are mixed with synthetic resin binder and the mixture is sprayed. A transparency is necessary for the electrode arranged to the substrate 32 at an observation side (display surface side), but it is not necessary to the substrate 31 at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferable to be 3 to 1000 nm, more preferable to be 5 to 400 nm. The material and the thickness of the electrode arranged to the rear substrate 31 are the same as those of the electrode arranged to the substrate at the display side, but transparency is not necessary. In this case, the applied outer voltage may be superimposed with a direct current or an alternate current.

As the partition wall 34 arranged according to need, a shape of the partition wall is suitably designed in accordance with a kind of the display media used for the display and is not restricted. However, it is preferred to set a width of the partition wall to 2 - 100 $\mu$m more preferably 3-50 $\mu$m and to set a height of the partition wall to 10 - 100 $\mu$m more preferably 10-50 $\mu$m.

Moreover, as a method of forming the partition wall, use may be made of a double rib method wherein ribs are formed on the opposed substrates respectively and they are connected with each other and a single rib method wherein a rib is formed on one of the opposed substrates only. The present invention may be preferably applied to both methods mentioned above.

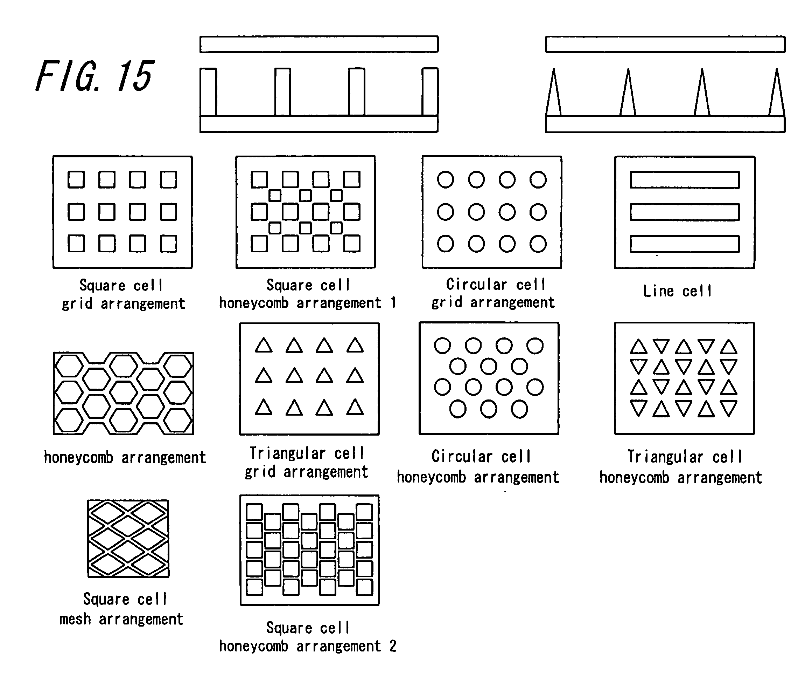

The cell formed by the partition walls each made of rib has a square shape, a triangular shape, a line shape, a circular shape and a hexagon shape, and has an arrangement such as a grid, a honeycomb and a mesh, as shown in Fig. 15 viewed from a plane surface of the substrate. It is preferred that the portion corresponding to a cross section of the partition wall observed from the display side (an area of the frame portion of the display cell) should be made as small as possible. In this case, a clearness of the image display can be improved.

The formation method of the partition wall is not particularly restricted, however, a die transfer method, a screen-printing method, a sandblast method, a photolithography method and an additive method. Among them, it is preferred to use a photolithography method using a resist film or a die transfer method.

Then, liquid powders including at least the white color particles according to the invention will be explained. It should be noted that a right of the name of liquid powders used in the information display panel according to the invention is granted to the applicant as "liquid powders" (Registerd): register No. 4636931.

In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book).

Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with the gravity. In the same manner, the liquid-solid fluidized body means a state that is fluidized by a liquid. (Heibonsha Ltd.: encyclopedia) In the present invention, it is found that the intermediate material having both of fluid properties and solid properties and exhibiting a self-fluidity without utilizing gas force and liquid force can be produced specifically, and this is defined as the liquid powders.

That is, as is the same as the definition of the liquid crystal (intermediate phase between a liquid and a solid), the liquid powders according to the invention are a material showing the intermediate state having both of liquid properties and particle properties, which is extremely difficult to receive an influence of the gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display device according to the invention, a solid material is used as a dispersant.

The information display panel which is a target of the present invention has a construction such that the liquid powders composed of a solid material stably floating as a dispersoid in a gas and exhibiting a high fluidity in an aerosol state are sealed between opposed two substrates, wherein one of two substrates is transparent. Such liquid powders can be made to move easily and stably by means of Coulomb's force and so on generated by applying a low voltage.

As mentioned above, the liquid powders means an intermediate material having both of liquid properties and particle properties and exhibiting a self-fluidity without utilizing gas force and liquid force. Such liquid powders become particularly an aerosol state. In the information display device according to the invention, the liquid powders used in a state such that a solid material is relatively and stably floating as a dispersoid in a gas.

Then, the particles for the display media (hereinafter, called sometimes as particles) constituting the display media used in the information display panel according to the invention will be explained. The particles for the display media may be used as the display media constituted by the particles only, or, as the display media constituted by mixing various groups of the particles, or, as the display media constituted by the liquid powders obtained by controlling and mixing the particles.

The particle may be composed of resins as a main ingredient, and can include according to need charge control agents, coloring agent, inorganic additives and so on as is the same as the known one. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent (CCA) include, but not particularly specified to, negative charge control agent such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agent include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and these derivates or salts; and resins containing various organic pigments, fluorine, chlorine, nitrogen, etc. can be employed as the electric charge control agent.

As for a coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15: 3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminum powder.

These coloring agents and inorganic additives may be used alone or in combination of two or more kinds thereof. Particularly, carbon black is preferable as the black coloring agent, and titanium oxide is preferable as the white coloring agent.

The particles for display media having a desired color can be produced by mixing the coloring agents mentioned above.

Moreover, as the average particle diameter d(0.5) of the particles for the display media (hereinafter, called sometimes as particles), it is preferred to set d(0.5) to 0.1 - 20 $\mu$m and to use even particles. If the average particle diameter d(0.5) exceeds this range, the image clearness sometimes deteriorated, and, if the average particle diameter is smaller than this range, an agglutination force between the particles becomes larger and the movement of the particles is prevented.

Further, it is preferred that particle diameter distribution Span of the particles, which is defined by the following formula, is less than 5 preferably less than 3:

$$\text{Span} = (d(0.9) - d(0.1))/d(0.5) \ ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, as a correlation between the particles, it is preferred to set a ratio of d(0.5) of the particles having smallest diameter with respect to d(0.5) of the particles having largest diameter to not more than 50 preferably not more than 10. The particles having different charge characteristics with each other are moved reversely, even if the particle diameter distribution Span is made smaller. Therefore, it is preferred that the particle sizes of the particles are made to be even with each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the display media properly depends upon the measuring condition. However, it is understood that the charge amount of the display media used for the display media in the information display panel substantially depends upon an initial charge amount, a contact with respect to the partition wall, a contact with respect to the substrate, a charge decay due to an elapsed time, and specifically a saturation value of the particles for the display media during a charge behavior is a main factor.

After various investigations of the inventors, it is fond that an adequate range of the charged values of the particles for the display media can be estimated by performing a blow-off method utilizing the same carrier particles so as to measure the charge amount of the particles for the display media.

Further, in the case that the display media such as the particles or the liquid powders are applied to a dry-type information display panel, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.

The above gap means a gas portion surrounding the display media obtained by substituting the electrodes 35, 36 (in the case that the electrodes are arranged inside of the substrate), an occupied portion of the display media 333, an occupied portion of the partition walls 34 and a seal portion of the device from the space between the substrate 31 and the substrate 32 for example in Figs. 14a and 14b.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the particles or the liquid powders and assembling the substrate under an atmosphere having a predetermined humidity and to apply a seal member and a seal method for preventing a humidity inclusion from outside of the device.

In the information display panel used in the information equipment according to the invention, an interval between the substrates is not restricted if the particles or the liquid powders can be moved and a contrast can be maintained, and it is adjusted normally to 10 - 500 μm, preferably 10 - 200 μm.

Moreover, it is preferred to control a volume occupied rate of the particles or the liquid powders in a space between the opposed substrates to 5 - 70 vol %, more preferably 5 - 60 vol %. If the volume occupied rate of the particles or the liquid powders exceeds 70 vol %, the particles or the liquid powders become difficult to move, and if it is less than 5 vol %, a sufficient contrast cannot be obtained and a clear image display is not performed.

INDUSTRIAL APPLICABILITY

In the information equipment according to the invention, since a plurality of scan electrodes are selected simultaneously, when the display information is to be changed, it is possible to obtain the information equipment, in which a display speed does not become slow even in a display device, which displays information by a passive drive or an active drive in which scan electrodes are sequentially addressed. Therefore, the information equipment according to the invention can be preferably applied to a device for such applications mentioned above.

**Claims**

1. Information equipment comprising: a display device (1) having display memory properties, which is arranged to display information by a passive drive or an active drive, in which scan electrodes are sequentially addressed; and a position detector (2) for detecting a position of an input means (4); which is arranged so that a display information is changed in accordance with an input of the position detector (2), **characterized in that** a plurality of said scan electrodes corresponding to the position of the input means (4) are selected simultaneously, when the display information corresponding to the position of the input means (4) is to be changed, and **in that** a writing operation is performed for only the simultaneously selected scan electrodes.

2. The information equipment according to claim 1, which is arranged so that with respect to the display information in which three of more scan electrodes are to be scanned for displaying, the display information is divided into a plurality of display information portions, which can be displayed at a time by selecting simultaneously a plurality of scan electrodes, and the display information portions are successively displayed.

3. The information equipment according to claim 2, which is arranged to that, in accordance with a gray level (density) of respective pixels in the display information to be displayed, the pixel is included in an overlapped manner in the display information portions, which can be displayed at a time by selecting simultaneously a plurality of scan electrodes.

4. The information equipment according to one of claims 1 - 3, wherein the display device (1) is constituted by an information display panel (11), in which at least two groups of display media (33) made of at least one group of particles having optical reflectance and charge characteristic are sealed in a gaseous space between two substrates (31, 32), at least one substrate being transparent, and, in which the sealed display media (33), to which an electrostatic field is applied from scan electrodes and select electrodes arranged respectively to the substrates (31, 32) in an intersecting manner, are made to move so as to display information such as an image.

5. The information equipment according to one of claims 1 to 4, which is arranged to that, a partial writing/partial deleting is further performed, in which the partial writing, in which a writing operation is performed for only the simultaneously selected scan electrodes, and a partial deleting, in which a deleting operation is performed for only the simultaneously selected scan electrodes, are performed.

**Patentansprüche**

1. Informationsausrüstung, umfassend: eine Anzeigevorrichtung (1) mit Anzeigespeichereigenschaften, die dafür eingerichtet ist, Information durch eine passive Ansteuerung oder eine aktive Ansteuerung anzuzeigen, bei der Abtastelektroden der Reihe nach angesprochen werden; und einen Positionsermittler (2) zum Ermitteln einer Position eines Eingabemittels (4), der so eingerichtet ist, dass eine Anzeigeinformation gemäß einer Eingabe des Positionsermittlers (2) geändert wird, **gekennzeichnet dadurch, dass** eine Vielzahl der Abtastelektroden, die der Position des Eingabemittels (4) entspricht, gleichzeitig ausgewählt wird, wenn die der Position des Eingabemittels (4) entsprechende Anzeigeinformation geändert werden soll, und dadurch, dass eine Schreiboperation nur für die gleichzeitig ausgewählten Abtastelektroden durchgeführt wird.

**2.** Informationsausrüstung nach Anspruch 1, die so eingerichtet ist, dass in Bezug auf die Anzeigeinformation, in der drei oder mehr Abtastelektroden zum Anzeigen abzutasten sind, die Anzeigeinformation in eine Vielzahl von Anzeigeinformationsabschnitten geteilt wird, die zu einem Zeitpunkt angezeigt werden können, indem eine Vielzahl von Abtastelektroden gleichzeitig ausgewählt wird, und die Anzeigeinformationsabschnitte nacheinander angezeigt werden.

**3.** Informationsausrüstung nach Anspruch 2, die so eingerichtet ist, dass gemäß einem Grauwert (Dichte) jeweiliger Bildpunkte in der anzuzeigenden Anzeigeinformation der Bildpunkt auf einander überschneidende Weise in die Anzeigeinformationsabschnitte einbezogen wird, die zu einem Zeitpunkt angezeigt werden können, indem eine Vielzahl von Abtastelektroden gleichzeitig ausgewählt wird.

**4.** Informationsausrüstung nach einem der Ansprüche 1 bis 3, worin die Anzeigevorrichtung (1) durch eine Informationsanzeigetafel (11) gebildet wird, in der mindestens zwei Gruppen von Anzeigemedien (33), die aus mindestens einer Gruppe von Teilchen mit optischer Reflexionsvermögens- und Ladungscharakteristik bestehen, in einem gashaltigen Raum zwischen zwei Substraten (31, 32) eingeschlossen sind, wobei mindestens ein Substrat transparent ist, und in der die eingeschlossenen Anzeigemedien (33), an die von Abtastelektroden und Auswahlelektroden, die jeweils auf einander kreuzende Weise auf den Substraten (31, 32) angeordnet sind, ein elektrostatisches Feld angelegt wird, dazu veranlasst werden, sich zu bewegen, um dadurch Information wie etwa ein Bild anzuzeigen.

**5.** Informationsausrüstung nach einem der Ansprüche 1 bis 4, die so eingerichtet ist, dass ferner ein teilweises Schreiben bzw. teilweises Löschen durchgeführt wird, wobei das teilweise Schreiben, bei dem eine Schreiboperation nur für die gleichzeitig ausgewählten Abtastelektroden durchgeführt wird, und das teilweise Löschen, bei dem eine Löschoperation nur für die gleichzeitig ausgewählten Abtastelektroden durchgeführt wird, durchgeführt werden.

## Revendications

**1.** Équipement d'information comprenant : un dispositif d'affichage (1) ayant des propriétés de mémoire d'affichage, qui est configuré pour afficher des informations par une commande passive ou une commande active, dans laquelle des électrodes de balayage sont séquentiellement adressées ; et un détecteur de position (2) pour détecter une position d'un moyen d'entrée (4) ; qui est configuré de sorte que des informations d'affichage soient modifiées en fonction d'une entrée du détecteur de position (2), **caractérisé en ce qu'**une pluralité desdites électrodes de balayage correspondant à la position du moyen d'entrée (4) sont choisis simultanément, lorsque les informations d'affichage correspondant à la position du moyen d'entrée (4) doivent être modifiées, et **en ce qu'**une opération d'écriture est effectuée uniquement pour les électrodes de balayage simultanément sélectionnées.

**2.** Équipement d'informations selon la revendication 1, qui est configuré de sorte qu'en ce qui concerne les informations d'affichage dans lesquelles trois électrodes de balayage ou plus doivent être balayées pour affichage, les informations d'affichage sont divisées en une pluralité de parties d'informations d'affichage, qui peuvent être affichées à un temps donné en sélectionnant simultanément une pluralité d'électrodes de balayage, et les parties d'informations d'affichage sont successivement affichées.

**3.** Équipement d'informations selon la revendication 2, qui est configuré de sorte qu'en fonction d'un niveau (densité) de gris de pixels respectif dans les informations d'affichage à afficher, le pixel est inclus d'une manière chevauchante dans les parties d'informations d'affichage, qui peuvent être affichées à un temps donné en sélectionnant simultanément une pluralité d'électrodes de balayage.

**4.** Équipement d'informations selon l'une des revendications 1 à 3, dans lequel le dispositif d'affichage (1) est constitué d'un panneau d'affichage d'informations (11), dans lequel au moins deux groupes de supports d'affichage (33) constitués d'au moins un groupe de particules ayant une réflectance optique et une caractéristique de charge sont scellées dans un espace gazeux entre deux substrats (31, 32), au moins un substrat étant transparent, et, dans lequel les supports d'affichage scellés (33), auxquels un champ électrostatique est appliqué à partir d'électrodes de balayage et d'électrodes de sélection agencées respectivement sur les substrats (31, 32) de manière à se croiser, sont amenés à bouger pour afficher des informations telles qu'une image.

5. Équipement d'informations selon l'une des revendications 1 à 4, qui est configuré de sorte qu'une écriture partielle/suppression partielle soit en outre effectuée, dans laquelle l'écriture partielle, dans laquelle une opération d'écriture est effectuée uniquement pour les électrodes de balayage simultanément sélectionnées, et une suppression partielle, où une opération de suppression est effectuée uniquement pour les électrodes de balayage simultanément sélectionnées, sont effectuées.

# FIG. 1

## FIG. 2

FIG. 3

*FIG. 4*

# FIG. 5

16

15

14

. . . .

8

. . . .

2

1

0

FIG. 6

# FIG. 7

halftone

bold type

small type

3

6

4

FIG. 8

## Components

Touch sensor controller PCB (17)

MCU PCB (18)

Touch sensor (12)

Pen
(19)

Driver ICs (16)

Row side

(a)

Display panel (11)

Driver ICs
(14)

Column side

Waveform generator PCB (15)

Waveform generator PCB (13)

## Block Diagram

Touch sensor

R1

R2    R3

R4

12

Touch sensor
controller PCB

17

Pen detect

XY data

Start_XY

(14, 16)    (13, 15)

(b)

11

Display panel

Driver ICs

Waveform
generator PCBs

Interrupt

18

MCU PCB
(Micro Controller Unit)

Column data

Row data

start

erase

Busy

EP 1 988 533 B1

# FIG. 9

Com_area_A
(3dot square)

Com_area_B
(7dot square)

Com_area_C
(7dot round)

Com_area_D
(7dot round)

A

B

C

ERASE

D

Command area (22)

Valid area (21)

Display panel (11)

Pen
(19)

(X, Y)

Coordination

Y (Row)

X (Column)

# FIG. 10

```
┌─────────────────────────┐
│  Interrupt: Pen detect   │
└─────────────────────────┘
            │
            ▼
┌─────────────────────────┐
│    Disable Interrupt     │
└─────────────────────────┘
            │
            ▼
┌─────────────────────────┐
│     Send START_XY        │
└─────────────────────────┘
            │
            ▼
┌─────────────────────────┐
│    Receive XY_DATA       │
└─────────────────────────┘
            │
            ▼
        ◇ Valid Area? ◇ ──No──────────────────┐
            │                                   │
           Yes                                  │
            ▼                                   │
        ◇ Command Area? ◇ ──No──┐              │
            │                     │              │
           Yes                    │              │
            ▼                     ▼              │
┌──────────────────┐  ┌──────────────────┐      │
│ Call sub_COMMAND │  │  Call sub_DRAW   │      │
└──────────────────┘  └──────────────────┘      │
            │                │                   │
            ▼◄───────────────┘                   ▼
┌──────────────────┐              ┌──────────────────────┐
│   ERROR = None   │              │ ERROR = Out_Of_ Area │
└──────────────────┘              └──────────────────────┘
            │◄────────────────────────────┘
            ▼
┌──────────────────┐
│  Enable Interrupt │
└──────────────────┘
            │
            ▼
┌──────────────────┐
│      Return      │
└──────────────────┘
```

# FIG. 11

```
┌─────────────────────┐
│    Sub_COMMAND      │
└─────────────────────┘
           │
           ▼
     ╱────────────╲              No
    ╱  Com_area_A? ╲──────────────┐
    ╲              ╱              │
     ╲────────────╱               │
           │ Yes                  │
           ▼                      │
┌─────────────────────┐          │
│   PEN_TYPE = 3_S    │          │
└─────────────────────┘          │
           │◄─────────────────────┘
           ▼
     ╱────────────╲              No
    ╱  Com_area_B? ╲──────────────┐
    ╲              ╱              │
     ╲────────────╱               │
           │ Yes                  │
           ▼                      │
┌─────────────────────┐          │
│   PEN_TYPE = 7_S    │          │
└─────────────────────┘          │
           │◄─────────────────────┘
           ▼
     ╱────────────╲              No
    ╱  Com_area_C? ╲──────────────┐
    ╲              ╱              │
     ╲────────────╱               │
           │ Yes                  │
           ▼                      │
┌─────────────────────┐          │
│   PEN_TYPE = 7_R    │          │
└─────────────────────┘          │
           │◄─────────────────────┘
           ▼
     ╱────────────╲              No
    ╱  Com_area_D? ╲──────────────┐
    ╲              ╱              │
     ╲────────────╱               │
           │ Yes                  │
           ▼                      │
┌─────────────────────┐          │
│  PEN_TYPE = ERASE   │          │
└─────────────────────┘          │
           │◄─────────────────────┘
           ▼
┌─────────────────────┐
│      Return         │
└─────────────────────┘
```

# FIG. 12

Flowchart:

**Sub_DRAW**

**PEN_TYPE?** (decision)

Branches: ERASE, 7_R, 7_S, 3_S

**Branch 3_S (A):**

ROW_DATA
Y − 1 : Select
Y    : Select
Y + 1 : Select
Others: Unselect

↓ Send ROW_DATA

COLUMN_DATA
X − 1 : Select
X    : Select
X + 1 : Select
Others: Unselect

↓ Send COLOMN_DATA

Send START

**A**

**Branch 7_S (B):**

ROW_DATA
Y − 3 : Select
Y − 2 : Select
Y − 1 : Select
Y    : Select
Y + 1 : Select
Y + 2 : Select
Y + 3 : Select
Others: Unselect

↓ Send ROW_DATA

COLUMN_DATA
X − 3 : Select
X − 2 : Select
X − 1 : Select
X    : Select
X + 1 : Select
X + 2 : Select
X + 3 : Select
Others: Unselect

↓ Send COLUMN_DATA

Send START

**B**

**Branch 7_R (C-1):**

ROW_DATA
Y − 2 : Select
Y + 2 : Select
Others: Unselect

↓ Send ROW_DATA

COLUMN_DATA
X − 2 : Select
X + 2 : Select
Others: Unselect

↓ Send COLOMN_DATA

Send START

**C-1**

**(C-2):**

ROW_DATA
Y − 3 : Select
Y − 2 : Select
Y + 2 : Select
Y + 3 : Select
Others: Unselect

↓ Send ROW_DATA

COLUMN_DATA
X − 1 : Select
X + 1 : Select
Others: Unselect

↓ Send COLUMN_DATA

Send START

**C-2**

**(C-3):**

ROW_DATA
Y − 1 : Select
Y    : Select
Y + 1 : Select
Others: Unselect

↓ Send ROW_DATA

COLUMN_DATA
X − 3 : Select
X − 2 : Select
X − 1 : Select
X    : Select
X + 1 : Select
X + 2 : Select
X + 3 : Select
Others: Unselect

↓ Send COLUMN_DATA

Send START

**C-3**

**Branch ERASE:**

Send ERASE

**Return**

EP 1 988 533 B1

# FIG. 13

# FIG. 14

(a)                                          (b)

FIG. 15

Square cell
grid arrangement

Square cell
honeycomb arrangement 1

Circular cell
grid arrangement

Line cell

Triangular cell
grid arrangement

Circular cell
honeycomb arrangement

Triangular cell
honeycomb arrangement

honeycomb arrangement

Square cell
honeycomb arrangement 2

Square cell
mesh arrangement

# FIG. 16

(a)

(b)

(c)

(d)

## REFERENCES CITED IN THE DESCRIPTION

**Patent documents cited in the description**

- US 5825345 A

- WO 2005055187 A

**Non-patent literature cited in the description**

- **CHOU KOKURAI et al.** New toner display device (I. *The Imaging Society of Japan ''Japan Hardcopy '99'' (July 21-23, 1999) Transaction,* 21 July 1999, 249-252